# EUROPÄISCHE PATENTANMELDUNG

(11) **EP 3 712 349 A1**
(43) Veröffentlichungstag der Anmeldung: **23.09.2020**
(21) Anmeldenummer: 20164687.4
(22) Anmeldetag: 20.03.2020
(51) Int. Cl.: E04G 7/30, B21D 39/04, F16B 7/04

(54) **GERÜSTSTIEL MIT ROHRVERBINDER**

(30) Priorität: 20.03.2019 DE 102019107158
(71) Anmelder: ALTRAD plettac assco GmbH, 58840 Plettenberg (DE)
(72) Erfinder: Blobel, Erhard, 27777 Ganderkesee (DE)
(74) Vertreter: Otten, Roth, Dobler & Partner mbB Patentanwälte

(57) **Zusammenfassung**

Gerüststiel (1) umfassend einen oberen Endabschnitt (2), einen Mittelabschnitt (3) und einen unteren Endabschnitt (4),
- wobei der obere Endabschnitt als Rohrverbinder (5) mit eine Rohrverbinderlänge L1 ausgebildet gebildet ist,
- wobei der Rohrverbinder (5) einen Einsteckabschnitt (6) mit einer Länge L2 und eine Stiel-Aufstell-Stirnfläche (7) umfasst,
- wobei der Rohrverbinder (5) mit der Stiel-Aufstell-Stirnfläche in den Mittelabschnitt (3) übergeht,
- wobei der Rohrverbinder (5) wenigstens einen Zentrierabschnitt (8) mit einer Länge L3 umfasst,
- wobei sich der Zentrierabschnitt (8) einschnürungsfrei an die Stiel-Aufstell-Stirnfläche (7) anschließt.

## Beschreibung

Die Erfindung betrifft einen Gerüststil mit einem angeformten Rohrverbinder für einen weiteren Gerüststiel.

Aus dem Stand der Technik, z.B. aus der EP 2 527 565 B1 sind Gerüststiele mit Rohrverbindern bekannt. Nachteilig an den bekannten Gerüststielen ist, dass die Ausbildung der Rohrverbinder oftmals mit komplexen Umformprozessen verbunden ist, um die benötigten Geometrien zur Verfügung zu stellen.

Aufgabe der vorliegenden Erfindung ist es, einen Gerüststiel mit angeformtem Rohrverbinder in seiner Herstellung vereinfacht zu gestalten und darüber hinaus bevorzugt im Gewicht zu optimieren und seine Stabilität zu verbessern.

Diese Aufgabe wird durch einen Gerüststiel nach den Merkmalen des Anspruchs 1 gelöst. Vorteilhafte Weiterbildungen sowie zweckmäßige Ausgestaltungen sind in den abhängigen Ansprüchen angegeben.

Die Erfindung betrifft einen Gerüststiel umfassend einen oberen Endabschnitt, einen Mittelabschnitt und einen unteren Endabschnitt, wobei der obere Endabschnitt als Rohrverbinder mit eine Rohrverbinderlänge L1 ausgebildet ist. Dabei umfasst der Rohrverbinder einen Einsteckabschnitt mit einer Länge L2 und eine Stiel-Aufstell-Stirnfläche, wobei der Rohrverbinder mit der Stiel-Aufstell-Stirnfläche in den Mittelabschnitt übergeht, und wobei der Rohrverbinder wenigstens einen Zentrierabschnitt mit einer Länge L3 umfasst. Die Erfindung ist dadurch gekennzeichnet, dass sich der Zentrierabschnitt einschnürungsfrei an die Stiel-Aufstell-Stirnfläche anschließt.

Ein einschnürungsfreier Übergang zwischen der Stiel-Aufstell-Stirnfläche und dem Zentrierabschnitt bietet eine erhöhte Stabilität, da keine Knicklinie im Bereich einer Einschnürung nach innen verläuft, und lässt sich im Massiv-Umform-Prozess vereinfacht ausbilden. Auch die Biegeelastizität im Bereich des Übergangs wird dadurch verringert.

Unter einem einschnürungsfreien Übergang ist insbesondere ein rechter Winkel zwischen der Stiel-Aufstell-Stirnfläche und dem Zentrierabschnitt zu verstehen.

Unter dem Zentrierabschnitt ist insbesondere auch die äußere Wandung des Zentrierabschnitts im Sinne einer Fläche zu verstehen, welche zur Stiel-Aufstell-Stirnfläche relativ positioniert ist.

Eine bevorzugte Ausgestaltung sieht vor, dass der Gerüststiel am Rohrverbinder eine weitestgehend konstante Wandstärke, bevorzugt vollständig konstante Wandstärke aufweist und insbesondere am oberen Ende des oberen Endabschnitts eine Fase ausgebildet ist. Die Wandstärke entspricht dabei vorzugsweise der Wandstärke des Ausgangsrohrs, aus welchem der Gerüststiel gefertigt ist.

Die Ausbildung einer konstanten Wandstärke über den gesamten Bereich des Rohrverbinders bewirkt eine gleichbleibende Stabilität bei optimiertem Gewicht. Über die bevorzugte Ausbildung einer Fase wird ein Einstecken des Rohrverbinders in einen Aufnahmebereich eines anderen Gerüststiels erleichtert.

Überdies bevorzugt ist vorgesehen, dass die Stiel-Aufstell-Stirnfläche am Umfang Ihrer Außenkante einen Durchmesser aufweist, welcher gegenüber einem Durchmesser des Mittelabschnitts des Gerüststiels vergrößert ausgebildet ist.

Eine weitere bevorzugte Ausführungsform sieht vor, dass am Übergang zwischen der Stiel-Aufstell-Stirnfläche zum Mittelabschnitt eine Verdickung, insbesondere eine Wulst ausgebildet ist, wobei die Verdickung einen gegenüber dem Durchmesser des Mittelabschnitts vergrößerten Durchmesser aufweist.

Durch Ausbildung einer Verdickung wird die Stiel-Aufstell-Stirnfläche in ihrer Ausprägung vergrößert, wodurch eine verbesserte Auflagefläche für einen aufgesteckten weiteren Gerüststiel entsteht, was die Krafteinleitung in Längsrichtung des Gerüststiels verbessert.

Überdies ist bevorzugt vorgesehen, dass der Rohrverbinder, ausgehend von der Stiel-Aufstell-Stirnfläche bis zum oberen Ende entweder einen konstanten Durchmesser aufweist, oder seinen Durchmesser ausschließlich verjüngt.

Ein konstanter Durchmesser verringert die Möglichkeit eines Verkippens eines weiteren aufgesteckten Gerüststiels auf den Rohrverbinder und bringt somit eine Verbesserung der Stabilität des Gesamtsystems mit sich.

Verjüngt sich der Durchmesser ausschließlich, wobei die Verjüngung abschnittsweise oder kontinuierlich erfolgen kann, so erleichtert dies das Aufeinanderstecken der Gerüststiele bei der Montage eines Baugerüsts.

Wird besonders bevorzugt die Verjüngung nur abschnittsweise ausgeführt, wobei sich nacheinander folgende Abschnitte, z.B. ein Zentrierabschnitt und ein darauf folgender Einsteckabschnitt stets verjüngen, so kann ein optimales Verhältnis von Montagekomfort und Kippstabilität herbeigeführt werden.

Eine bevorzugte Ausgestaltung sieht überdies vor, dass am unteren Endabschnitt ein Innendurchmesser ausgebildet ist, der in etwa gleich dem Außendurchmesser des oberen Endabschnitts, oder gegenüber dem Außendurchmesser des oberen Endabschnitts vergrößert ausgebildet ist, um eine Aufnahme eines Rohrverbinders durch Aufstecken eines weiteren entsprechenden Gerüststiels zu ermöglichen.

Auf diese Weise entsteht ein modulares System, bei welchem sich aus einer Mehrzahl von Gerüststielen eine stabile und montageoptimierte Gerüstsäule aufbauen lässt.

### Beschreibung eines Ausführungsbeispiels:

Die Erfindung soll anhand eines nachfolgend exemplarisch beschriebenen Ausführungsbeispiels weiter erläutert werden. Die Erfindung ist dabei jedoch nicht auf die dargestellte Ausführungsform beschränkt.

Es zeigen:
Fig. 1 einen exemplarischen Gerüststiel mit angeformtem Rohrverbinder;
Fig. 2 den oberen Endabschnitt des Gerüststiels;
Fig.3 den unteren Endabschnitt des Gerüststiels.

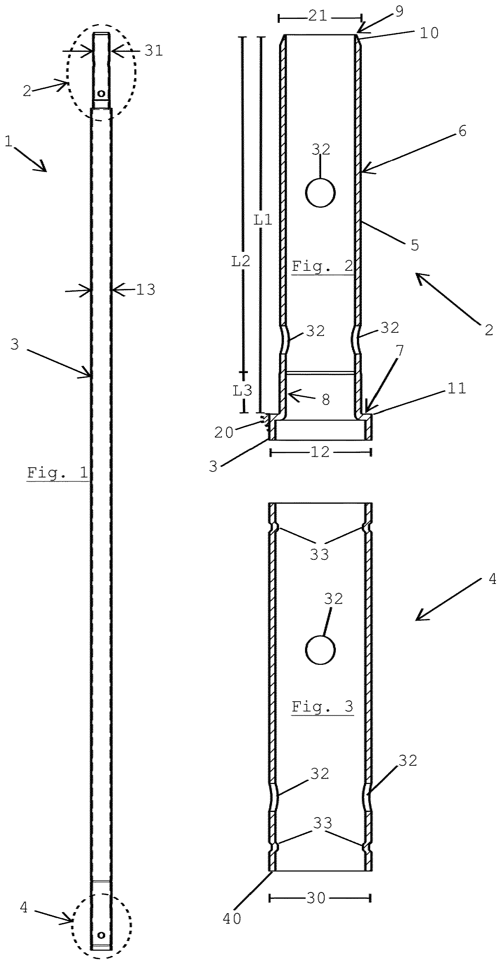

Im Einzelnen zeigt Fig. 1 einen Gerüststiel 1 mit einem oberen Endabschnitt 2, einem Mittelabschnitt 3 und einem unteren Endabschnitt 4. Der Mittelabschnitt 3 verbindet dabei die Endabschnitte 2 und 4, ist um ein vielfaches länger als diese und bildet somit den längsten Teil des Gerüststiels. Der Gerüststiel 1 ist bevorzugt einstückig aus einem Rohr gebildet, an dessen Enden die Endabschnitte 2 und 4 mit den jeweiligen technischen Geometrien bevorzugt durch Massivumformung angeformt sind.

Der Mittelabschnitt 3 weist einen Außendurchmesser 13 auf, welcher im Wesentlichen dem Rohrdurchmesser des verwendeten Rohrs entspricht. Der obere Endabschnitt 2 weist einen Außendurchmesser 31 auf, welcher gegenüber dem Außendurchmesser 13 verringert ausgebildet ist. In der dargestellten Ausführungsform ist der Innendurchmesser des Rohrs im Mittelabschnitt 3 sowie im unteren Endabschnitt 4, welcher sich aus dem Außendurchmesser 13 abzüglich der 2-fachen Wandstärke des Rohrs ergibt, größer ausgebildet, als der Außendurchmesser 31 des oberen Endabschnitts 2, so dass ein Einstecken des oberen Endabschnitts 2 eines Gerüststiels in den Innenraum des Rohrs am unteren Endabschnitt 4 eines weiteren entsprechenden Gerüststiels ermöglicht wird.

Fig. 2 zeigt eine detailliertere Darstellung des oberen Endabschnitts 2. Dabei umfasst der obere Endabschnitt 2 einen Rohrverbinder 5 mit einer Rohrverbinderlänge L1. Der Rohrverbinder 5 ist derjenige Abschnitt, welcher beim Aufeinanderstecken zweier entsprechender Gerüststiele in den unteren Endabschnitt des weiteren Gerüststiels eintaucht und dort eine Verbindung ausbildet.

Der Rohrverbinder 5 umfasst einen Einsteckabschnitt 6 mit einer Länge L2 sowie einen Zentrierabschnitt 8 mit einer Länge L3. Bei aufgestecktem weiterem Gerüstrohr sorgt der Einsteckabschnitt im Wesentlichen für die benötigte Kippstabilität, da er sich an der Innenwandung des unteren Endabschnitts des weiteren Gerüststiels abstützt. Der Zentrierabschnitt sorgt dafür, dass die Wandung des aufgesteckten weiteren Gerüststiels mit ihrer Wandungsstirnfläche 40 auf der Stiel-Aufstell-Stirnfläche 7 möglichst vollständig aufliegt, um eine optimale Krafteinleitung der Vertikalkräfte in den Gerüststiel zu gewährleisten.

Die Kante am Übergang zwischen Stiel-Aufstell-Stirnfläche 7 und dem Zentrierabschnitt 8 ist einschnürungsfrei als rechter Winkel ausgebildet. Technisch bedingte minimale Radien, welche durch das Material selbst bedingt sind, bleiben dabei unberücksichtigt.

Die Vermeidung einer Einschnürung, welche im Stand der Technik oftmals als Schmutzbereich für das Ausweichen von Verunreinigungen vorgesehen ist, bedingt zumindest eine in gleicher Richtung verlaufende Krümmung des Übergangs von der Stiel-Aufstell-Stirnfläche 7 zu dem Zentrierabschnitt 8.

Unter dem Zentrierabschnitt 8 ist insbesondere auch die äußere Wandung des Zentrierabschnitts 8 im Sinne einer Fläche zu verstehen, welche zur Stiel-Aufstell-Stirnfläche relativ positioniert ist.

Der gesamte obere Endabschnitt 2 weißt in einer bevorzugten Ausführung eine im Wesentlichen konstante Wandstärke auf, welche bevorzugt der Wandstärke des gesamten Gerüststiels entspricht.

An seinem oberen Ende 9 umfasst der obere Endabschnitt 2 eine Fase 10, welche ein Einführen in einen unteren Endabschnitt eines weiteren Gerüststiels erleichtert.

Der Zentrierbereich 8 kann einen gegenüber dem Durchmesser des Einsteckabschnitts minimal vergrößerten Durchmesser, insbesondere im Bereich kleiner gleich einem Milimeter, aufweisen, um einen aufgesteckten Gerüststiel auf der Stiel-Aufstell-Stirnfläche 7 optimal zu zentrieren. Dabei kann die Vergrößerung entweder durch Massivumformung mittels aufstauchender Verdickung der Wand des Rohres in diesem Zentrierbereich 8 oder durch entsprechende Ausdrückung bei geleichbleibender Wandstärke des Rohres erfolgen.

Eine weitere , vorliegend nur exemplarisch dargestellte Ausführungsform sieht vor, dass der Umfang der Außenkante 11 der Stiel-Aufstell-Stirnfläche 7 einen Durchmesser 12 aufweist, welcher gegenüber dem Durchmesser 13 des Mittelabschnitts 3 des Gerüststiels 1 vergrößert ausgebildet ist. Der daraus entstehende Überstand im Bereich der Stiel-Aufstell-Stirnfläche 7 begünstigt ein vollflächiges Aufsetzen der Stirnfläche 40 eines aufgesteckten weiteren Gerüststiels und damit eine Verbesserung der vertikalen Krafteinleitung.

Besonders bevorzugt ist, dass an der Außenkante 11 ein Wulst 20 ausgebildet ist, welcher insbesondere durch Massivumformung bei der Ausbildung des Rohrverbinders angeformt werden kann. In Fig. 2 ist der Wulst 20 nur auf einer Seite (linke) dargestellt. Der Wulst wird zweckmäßigerweise jedoch umlaufend ausgebildet, so dass der Gerüststiel 1 insgesamt am Übergangsbereich von Stiel-Aufstell-Stirnfläche 7 in den Mittelabschnitt 3 einen gegenüber dem Durchmesser 13 vergrößerten Durchmesser aufweist.

Der Rohrverbinder 5 ist vorliegend mit nahezu vollständig konstantem Durchmesser entlang seiner Länge L1 ausgebildet. Lediglich im Zentrierabschnitt 8 ist der Durchmesser gegenüber dem Durchmesser 21 am oberen Ende 9 geringfügig vergrößert. Der gesamte Verlauf des Durchmessers des Gerüststiels von dem Durchmesser an der Außenkante 11 der Stiel-Aufstell-Stirnfläche 7 über den Zentrierabschnitt 8 bis zum Einsteckbschnitt 6 und dessen oberes Ende 9 bildet bevorzugt eine stufenweise, ausschließliche Verjüngung ohne Hinterschnitte aus.

Der Gerüststiel umfasst sowohl an seinem oberen Endabschnitt 2 als auch an seinem unteren Endabschnitt 4 Bohrungen 32, welche zur Einbringung von Sicherungsmitteln gegen ein auseinanderziehen von aufeinander gesteckten Gerüststielen dienen.

Fig. 3 zeigt einen unteren Endabschnitt 4 mit entsprechendem Innendurchmesser 30, welcher zur Aufnahme eines Rohrverbinders 6 mit einem Außendurchmesser 31 ausgebildet ist.

Zum Ausgleich von Spiel kann der untere Endabschnitt 4 angeformte umlaufende Sicken 33 aufweisen, welche in den Innenraum der unteren Endabschnitts 4 einragen und ggf. eine verbesserte Anlage an dem Einsteckabschnitt 6 oder dem Zentrierabschnitt 8 des Rohrverbinders 5 ausbilden.

### Bezugszeichenliste:

- 1: Gerüststiel
- 2: oberer Endabschnitt
- 3: Mittelabschnitt
- 4: unterer Endabschnitt
- 5: Rohrverbinder
- 6: Einsteckabschnitt
- 7: Stiel-Aufstell-Stirnfläche
- 8: Zentrierabschnitt
- 9: oberes Ende
- 10: Fase
- 11: Außenkante
- 12: Durchmesser
- 13: Durchmesser
- 20: Wulst
- 21: Durchmesser
- 30: Innendurchmesser
- 31: Außendurchmesser
- 32: Bohrungen
- 33: Sicken
- 40: Stirnfläche

- L1: Rohrverbinderlänge
- L2: Länge Einsteckabschnitt
- L3: Länge Zentrierabschnitt

## Patentansprüche

1. Gerüststiel (1) umfassend einen oberen Endabschnitt (2), einen Mittelabschnitt (3) und einen unteren Endabschnitt (4),
- wobei der obere Endabschnitt als Rohrverbinder (5) mit eine Rohrverbinderlänge L1 ausgebildet gebildet ist,
- wobei der Rohrverbinder (5) einen Einsteckabschnitt (6) mit einer Länge L2 und eine Stiel-Aufstell-Stirnfläche (7) umfasst,
- wobei der Rohrverbinder (5) mit der Stiel-Aufstell-Stirnfläche in den Mittelabschnitt (3) übergeht,
- wobei der Rohrverbinder (5) wenigstens einen Zentrierabschnitt (8) mit einer Länge L3 umfasst,
**dadurch gekennzeichnet,**
- **dass** sich der Zentrierabschnitt (8) einschnürungsfrei an die Stiel-Aufstell-Stirnfläche (7) anschließt.

2. Gerüststiel (1) nach Anspruch 1, **dadurch gekennzeichnet, dass** der Gerüststiel (1) am Rohrverbinder eine im Wesentlichen konstante Wandstärke aufweist und insbesondere am oberen Ende (9) des oberen Endabschnitts (2) eine Fase (10) oder eine Ankuppung ausgebildet ist.

3. Gerüststiel nach Anspruch 1 oder 2, **dadurch gekennzeichnet, dass** die Stiel-Aufstell-Stirnfläche (7) am Umfang Ihrer Außenkante (11) einen Durchmesser (12) aufweist, welcher gegenüber einem Durchmesser (13) des Mittelabschnitts (3) des Gerüststiels größer ausgebildet ist.

4. Gerüststiel nach einem der vorangegangenen Ansprüche, **dadurch gekennzeichnet, dass** am Übergang zwischen der Stiel-Aufstell-Stirnfläche (7) zum Mittelabschnitt (3) eine Verdickung, insbesondere eine Wulst (20) ausgebildet ist, wobei die Verdickung einen gegenüber dem Durchmesser (13) des Mittelabschnitts (3) vergrößerten Durchmesser aufweist.

5. Gerüststiel nach einem der vorangegangenen Ansprüche, **dadurch gekennzeichnet, dass** der Rohrverbinder (5), ausgehend von der Stiel-Aufstell-Stirnfläche (7) bis zum oberen Ende (9) entweder einen konstanten Durchmesser (21) aufweist, oder seinen Durchmesser ausschließlich verjüngt.

6. Gerüststiel nach einem der vorangegangenen Ansprüche, **dadurch gekennzeichnet, dass** am unteren Endabschnitt (4) ein Innendurchmesser (30) ausgebildet ist, der in etwa gleich dem Außendurchmesser (31) des oberen Endabschnitts (2), oder gegenüber dem Außendurchmesser (31) des oberen Endabschnitts (2) vergrößert ausgebildet ist, um eine Aufnahme eines Rohrverbinders durch Aufstecken eines weiteren entsprechenden Gerüststiels zu ermöglichen.

7. Gerüststiel nach einem der vorangegangenen Ansprüche, **dadurch gekennzeichnet, dass** die Stiel-Aufstell-Stirnfläche (7) mit dem Zentrierabschnitt (8) einen rechten Winkel einschließt.

8. Gerüststiel nach einem der vorangegangenen Ansprüche, **dadurch gekennzeichnet, dass** die Stiel-Aufstell-Stirnfläche (7) in den Zentrierabschnitt (8) mit einer in gleicher Richtung verlaufenden Krümmung entlang des Übergangs übergeht.
